# FASCICULE DE BREVET EUROPEEN

(11) **EP 0 704 637 B1**
(45) Date de publication et mention de la délivrance du brevet: **23.08.2000**
(21) Numéro de dépôt: 95115209.9
(22) Date de dépôt: 27.09.1995
(51) Int. Cl.: F16D 13/64

(54) **Disque de friction d'embrayage à plaquettes de progressivité**
Reibungskupplungsscheibe mit abgefedernden Platten
Clutch friction disc with cushioning plates

(30) Priorité: 27.09.1994 FR 9411501
(43) Date de publication de la demande: 03.04.1996
(73) Titulaire: VALEO, 75017 Paris (FR)
(72) Inventeur: Schubert, Florian, F-80000 Amiens (FR)
(74) Mandataire: Gamonal, Didier

(56) Documents cités:
- FR-A- 1 067 727
- US-A- 2 117 527
- US-A- 2 119 025
- US-A- 2 327 884

## Description

L'invention se rapporte à un disque de friction d'embrayage à plaquettes de progressivité, c'est-à-dire du type comportant un ensemble porte-garnitures comprenant un disque-support et des plaquettes de progressivité fixées sur une face de ce disque-support.

L'invention concerne plus particulièrement un perfectionnement portant notamment sur la conformation du disque-support et des plaquettes de progressivité ainsi que sur l'assemblage de ces éléments.

On connaît un disque de friction d'embrayage comprenant un disque-support en tôle d'acier portant sur chacune de ses faces une garniture de friction constituée par un disque épais en matériau de friction.

De manière connue en soi, ces garnitures de friction sont destinées à être serrées entre les plateaux de pression et de réaction de l'embrayage. Ces plateaux d'embrayage sont liés en rotation à un arbre menant (le vilebrequin du moteur dans une application au véhicule automobile), tandis que le disque de friction est calé en rotation, par l'intermédiaire de son moyeu, sur un arbre mené (l'arbre d'entrée de la boîte de vitesses dans le cadre d'un véhicule automobile). Un tel disque de friction d'embrayage doit être conformé pour que le disque de matériau de friction puisse s'adapter à une déformation en cône du plateau d'embrayage associé, survenant progressivement au cours de chaque période d'utilisation en fonction de l'échauffement de celui-ci. Pour ce faire, il est connu de découper des sortes de "pales" dans le disque-support et de réaliser des plis dans celles-ci. Par conséquent, à l'embrayage, les pales sont progressivement et élastiquement déformées au cours de la manoeuvre d'embrayage, ce qui limite les usures localisées des garnitures de friction dues à la déformation en cône du plateau. Par ailleurs, cette déformation élastique du disque-support confère une certaine progressivité à l'embrayage et un confort pour l'usager.

Cependant, les garnitures sont peu soutenues par le disque-support, puisqu'elles sont fixées à des pales cambrées. De ce fait, les garnitures se déforment et s'usent inégalement circonférentiellement. Leur surface de contact présente à la longue des ondulations dans le sens circonférentiel dues à des phénomènes d'incrustation entre les plis des pales.

Dans un autre système connu par le document FR-A-1 067 727 conforme au préambule de la revendication 1, on a tenté de remédier à cet inconvénient en rapportant sur le disque de friction des plaquettes cambrées, réparties côte-à-côte sur une zone annulaire du disque-support. Ces plaquettes sont appelées plaquettes de progressivité. Les garnitures de friction sont fixées sur la face libre du disque-support.

Dans un tel système, la surface de contact entre les plaquettes de progressivité et la garniture de friction correspondante ne peut être augmentée suffisamment pour éviter en toutes circonstances la déformation progressive du disque de matériau de friction.

L'un des buts de l'invention est de proposer un disque de friction d'embrayage du type indiqué ci-dessus comportant un disque de montage muni de plaquettes de progressivité et dans lequel la surface de montage entre la garniture de friction et les plaquettes de progressivité soit augmentée au-delà des limites atteintes jusqu'à présent.

Un autre but de l'invention est de proposer un tel disque de friction d'embrayage présentant une structure améliorant globalement la progressivité.

Ce problème est résolu, selon l'invention, par la partie caractérisante de la revendication 1.

Grâce à l'invention, la surface de montage entre la garniture de friction et les plaquettes de progressivité est augmentée. Plus précisément, on diminue la surface d'appui qu'offre le disque-support à sa garniture de friction associée pour soutenir les plaquettes de progressivité.

Celles-ci, grâce à la bande de montage, peuvent suivre le mouvement de mise en cône du plateau d'embrayage concerné. Grâce aux plis, on obtient une bonne progressivité, tout en ayant une surface de montage très grande.

Selon une autre caractéristique avantageuse, un bord de chaque découpe qui sert à définir la bande de montage est plié en direction d'une plaquette de progressivité correspondante.

En outre, le disque-support et les plaquettes de progressivité comportent des fentes, de préférence sensiblement radiales, dont les bords sont pliés, pour augmenter la progressivité.

Enfin, avantageusement, chaque plaquette de progressivité est solidarisée au disque-support, sur ladite bande de montage, en au moins deux points de fixation, par exemple par des rivets, et ces points de fixation sont tels qu'une ligne droite joignant ces deux points passe sensiblement par le centre de gravité de la plaquette de progressivité. Ce dernier perfectionnement permet de réduire les forces de cisaillement s'exerçant sur les rivets de fixation entre le disque-support et la plaquette. On réduit du même coup les forces de cisaillement s'exerçant sur les rivets de montage des garnitures de friction, qui engendrent des contraintes dans ces dernières. Le disque de friction a ainsi une meilleure résistance aux effets de la force centrifuge.

L'invention sera mieux comprise et d'autres avantages de celle-ci apparaîtront plus clairement à la lumière de la description qui va suivre d'un disque de friction d'embrayage conforme à son principe, donnée uniquement à titre d'exemple et faite en référence aux dessins annexés dans lesquels:
- la figure 1 est une vue partielle du disque-support d'un disque de friction d'embrayage selon l'invention;
- la figure 2 est une vue partielle du disque de friction d'embrayage montrant plus particulièrement l'assemblage entre le disque-support et les plaquettes de progressivité; et
- la figure 3 représente l'une des plaquettes de progressivité.

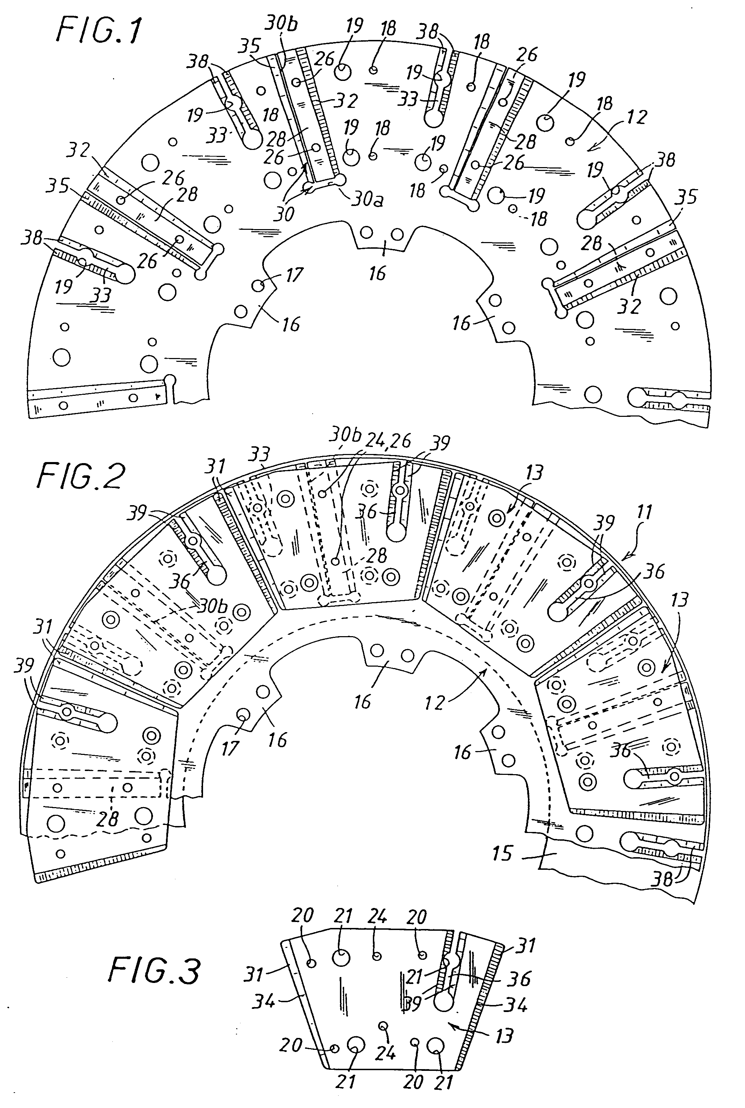

Sur les dessins, on a représenté un disque de friction d'embrayage 11, constitué principalement d'un disque-support 12, de plaquettes de progressivité 13, ici au nombre de neuf et de deux disques de matériau de friction 15 montés par des rivets de part et d'autre d'un ensemble comprenant le disque-support 12 et les neuf plaquettes 13 fixées côte-à-côte par une seule face du disque 12. Un seul disque de matériau de friction 15 est partiellement visible sur la figure 2 pour ne pas surcharger le dessin. Pour la même raison, les rivets de montage entre le disque 12 et les plaquettes 13 et les rivets de fixation des disques de matériau de friction n'ont pas été représentés.

Le disque-support 12 a la forme générale d'une couronne plate. Il est en tôle d'acier découpée et emboutie à froid. Il comporte des pattes 16, à sa périphérie interne, munies de trous 17, pour sa fixation par rivetage, ici à un amortisseur de torsion, qui, de manière connue en soi, dans un embrayage accouple de manière élastique le disque-support 12 au moyeu du disque de friction calé en rotation sur l'arbre d'entrée de la boîte de vitesses. Ce disque-support 12 comporte aussi des trous 18 (de petit diamètre) pour le passage des rivets de fixation du disque de matériau de friction 15 situé du côté d'un volant d'inertie (ou plateau de réaction) entraîné par un arbre menant (typiquement le vilebrequin du moteur) et des trous 19 (de plus grand diamètre) dans lesquels se logent les têtes des rivets de fixation de l'autre disque de matériau de friction situé du côté du plateau de pression.

De façon semblable, chaque plaquette de progressivité 13 comporte des trous 20 (de petit diamètre) pour le passage des rivets de fixation du disque de matériau de friction situé du côté du plateau de pression et des trous 21 (de grand diamètre) dans lesquels se logent les têtes des rivets de fixation du disque de matériau de friction situé du côté du volant d'inertie.

Bien entendu, les disques de friction 15 présentent, d'une part, des trous pour logement des têtes des rivets de fixation et diminution de l'épaisseur du disque d'embrayage et, d'autre part, des trous épaulés pour appui des pieds des rivets de fixation. Les rivets de fixation sont donc montés tête-bêche d'un disque de friction 15 à l'autre, leur tête s'appuyant respectivement sur la face interne des plaquettes 13 et sur la face interne en vis-à-vis du disque-support 12, lesdites têtes étant de diamètre supérieur à celui des pieds de rivets de fixation.

On notera que les plaquettes 13 sont également métalliques et d'épaisseur inférieure à celle du disque de support 12. Ces plaquettes 13 sont donc souples. Chaque plaquette de progressivité 13 a une forme approximativement trapézoïdale, comme représenté, et les neuf plaquettes sont fixées côte-à-côte sur une même face du disque-support 12, en formant une sorte de couronne, comme représenté à la figure 3. Pour l'assemblage des plaquettes de progressivité 13 et du disque 12, chaque plaquette 13 comporte deux trous 24 pour le passage des rivets réalisant sa fixation au disque-support 12 et ce dernier comporte un nombre correspondant de trous 26 (18 dans l'exemple représenté) pour le passage des mêmes rivets.

Selon une caractéristique importante de l'invention, chaque plaquette de progressivité 13 est fixée à une bande de montage 28 du disque-support 12, décalée axialement du plan principal de celui-ci. Plus précisément, en considérant la figure 1, ledit principal plan serait constitué par le plan du dessin et les bandes de montage 28 se situeraient légèrement au-dessus de ce plan. Chaque bande de montage est individualisée par une découpe 30 pratiquée dans le disque-support 12. Cette découpe a une forme approximativement en L, c'est-à-dire composée d'un tronçon approximativement circonférentiel 30a et d'un tronçon sensiblement radial 30b. Le tronçon radial 30b s'étend jusqu'au bord externe du disque-support 12. Une fois cette découpe réalisée, on peut, par déformation, décaler axialement la bande de montage 28 du plan principal du disque-support 12 et ladite bande de montage se raccorde audit plan principal par une zone de pli 32. Bien entendu, les trous 26 pour le passage des rivets de fixation des plaquettes de progressivité au disque de support 12 sont répartis sur les bandes de montage 28, à raison de deux par bande.

De plus, pour assurer la stabilité du montage de la plaquette et pour participer à la progressivité, certains bords de la plaquette, ici les bords 31 sensiblement radiaux, sont pliés en direction du plan principal du disque-support 12. De même, un bord de chaque découpe 30 du disque-support 12, en l'occurrence celui qui est défini par le tronçon 30b et qui longe radialement la bande de montage 28, est plié en direction de la plaquette de progressivité 13 correspondante. Chaque pli 34 d'un bord 31 et chaque pli 35 d'un bord du tronçon 30b consiste en un faible cambrage rectiligne qui intéresse une zone de quelques millimètres de large à partir du bord concerné. Lorsque les garnitures de friction ne sont pas serrées, un jeu existe avantageusement au niveau des plis 34, 35.

Toutes les zones de pli et les bords pliés qui viennent d'être décrits participent donc à la progressivité du disque de friction d'embrayage. Pour renforcer encore cette progressivité, le disque-support comporte d'autres fentes 33, sensiblement radiales, dont les bords sont pliés en direction desdites plaquettes et chaque plaquette de progressivité comporte au moins une fente 36, semblable, dont les bords sont pliés en direction dudit disque-support. Dans l'exemple décrit, le nombre de fentes pratiquées dans le disque-support est égal au nombre de fentes pratiquées dans l'ensemble des plaquettes de progressivité, à savoir neuf fentes pour le disque-support et neuf fentes au total pour les plaquettes de progressivité 13. Toutes les fentes 33 débouchent sur le bord circonférentiel externe du disque-support 12 et chaque fente 36 débouche sur le bord extérieur de la plaquette de progressivité 13 correspondante.

Les plis 38 créés sur les bords des fentes 33 et les plis 39 créés sur les bords des fentes 36 consistent, comme les plis 31, 34, en de faibles cambrages rectilignes intéressant une zone de quelques millimètres de large à partir du bord concerné.

Comme il ressort clairement de la figure 3, la fente de chaque plaquette de progressivité et la fente du disque-support en regard de cette plaquette sont situées circonférentiellement de part et d'autre de la bande de montage 28 et ce, de manière symétrique .

Comme indiqué précédemment, chaque plaquette de progressivité 13 est solidarisée au disque-support 12, sur la bande de montage 28 correspondante, par au moins deux rivets engagés dans les trous 24, 26 en correspondance. Ces deux points de fixations sont choisis de telle façon qu'une ligne les joignant passe sensiblement par le centre de gravité de la plaquette de progressivité concernée.

Comme mentionné ci-dessus, cet emplacement judicieux des points de fixation permet de réduire les efforts de cisaillement sur les rivets d'assemblage entre le disque-support 12 et les plaquettes de progressivité 13 et de réduire les contraintes dans les disques de matériau de friction 15.

On appréciera, grâce aux plis 31, 35, 39 et aux bandes 28, que les plaquettes de progressivités sont bien soutenues lorsque les garnitures de friction sont serrées entre les plateaux de pression et de réaction et que chaque plaquette de progressivité (figure 3) offre une grande surface de montage pour le disque de friction concerné. Bien entendu, les fentes 36 et 33 sont moins hautes que les bandes 28, qui s'étendent sur une grande partie de la hauteur des plaquettes 13.

Enfin, on peut si désiré, inverser les structures, les plaquettes de progressivité étant alors associées à la garniture de friction frottant contre le plateau de réaction, tandis que la garniture de friction associée au disque-support est alors admise à frotter contre le plateau de pression.

## Revendications

1. Disque de friction d'embrayage du type comportant un ensemble porte-garnitures comprenant un disque-support (12) et des plaquettes de progressivité (13) fixées sur une face dudit disque-support, caractérisé en ce que chaque plaquette de progressivité est fixée à une bande de montage (28) dudit disque-support, décalée axialement du plan principal de celui-ci en direction de la plaquette de progressivité concernée, ladite bande de montage étant individualisée par une découpe (30) et se raccordant audit plan principal dudit disque par une zone de pli (32), en ce que les bords (31) latéraux de chaque plaquette de progressivité sont pliés en direction dudit plan principal dudit disque-support, et en ce que les bandes de montage (28) s'étendent sur une grande partie de la hauteur des plaquettes de progressivité (13).

2. Disque de friction d'embrayage selon la revendication 1, caractérisé en ce qu'un bord (30b) de chaque découpe, parallèle à une bande de montage (28) précitée est plié en direction d'une plaquette de progressivité correspondante.

3. Disque de friction d'embrayage selon la revendication 1 ou 2, caractérisé en ce que ledit disque-support comporte des fentes (33) dont les bords sont pliés en direction desdites plaquettes de progressivité.

4. Disque de friction d'embrayage selon l'une des revendications 1 à 3, caractérisé en ce que lesdites plaquettes de progressivité comportent des fentes (36) dont les bords sont pliés en direction dudit disque-support.

5. Disque de friction d'embrayage selon l'ensemble des revendications 3 et 4, caractérisé en ce que le nombre de fentes (33) précitées pratiquées dans ledit disque-support est égal au nombre de fentes (36) pratiquées dans l'ensemble desdites plaquettes de progressivité.

6. Disque de friction d'embrayage selon la revendication 5, dans lequel chaque plaquette de progressivité comporte une fente (36) précitée, caractérisé en ce que la fente (36) de chaque plaquette de progressivité et la fente (33) du disque-support en regard de cette plaquette sont situées de part et d'autre de ladite bande de montage (28), circonférentiellement.

7. Disque de friction d'embrayage selon la revendication 6, caractérisé en ce que les fentes (36, 33) des plaquettes de progressivité (13) et du disque-support (12) ont une hauteur inférieure à celle des bandes de montage.

8. Disque de friction d'embrayage selon l'une des revendications précédentes, caractérisé en ce que chaque plaquette de progressivité (13) est solidarisé audit disque-support sur ladite bande de montage (28) en au moins deux points de fixation tels qu'une ligne joignant ces deux points passe sensiblement par le centre de gravité de ladite plaquette de progressivité.

9. Disque de friction d'embrayage selon l'une des revendications précédentes, caractérisé en ce que la découpe (30) s'étend jusqu'au bord externe du disque-support (12).

10. Disque de friction d'embrayage selon la revendication 9, caractérisé en ce que la découpe (30) a globalement une forme en L.

## Patentansprüche

1. Reibungskupplungsscheibe in der Ausführung mit einer Belagträgereinheit, umfassend eine Trägerscheibe (12) und Progressivitätsplättchen (13), die auf einer Seite der besagten Trägerscheibe befestigt sind, **dadurch gekennzeichnet,** daß jedes Progressivitätsplättchen an einem Montagestreifen (28) der besagten Trägerscheibe befestigt ist, der axial von der Hauptebene dieser Scheibe in Richtung des betreffenden Progressivitätsplättchens versetzt ist, wobei der besagte Montagestreifen durch einen Einschnitt (30) abgegrenzt ist und sich an die besagte Hauptebene der besagten Scheibe durch einen Biegungsbereich (32) anschließt, daß die Seitenkanten (31) jedes Progressivitätsplättchens in Richtung der besagten Hauptebene der besagten Trägerscheibe gebogen sind und daß sich die Montagestreifen (28) auf einem großen Teil der Höhe der Progressivitätsplättchen (13) erstrecken.

2. Reibungskupplungsscheibe nach Anspruch 1, **dadurch gekennzeichnet,** daß eine Kante (30b) jedes Einschnitts, parallel zu einem vorgenannten Montagestreifen (28), in Richtung eines entsprechenden Progressivitätsplättchens gebogen ist.

3. Reibungskupplungsscheibe nach Anspruch 1 oder 2, **dadurch gekennzeichnet,** daß die besagte Trägerscheibe Schlitze (33) enthält, deren Kanten in Richtung der besagten Progressivitätsplättchen gebogen sind.

4. Reibungskupplungsscheibe nach einem der Ansprüche 1 bis 3, **dadurch gekennzeichnet,** daß die besagten Progressivitätsplättchen Schlitze (36) enthalten, deren Kanten in Richtung der besagten Trägerscheibe gebogen sind.

5. Reibungskupplungsscheibe nach den Ansprüchen 3 und 4 insgesamt, **dadurch gekennzeichnet,** daß die Anzahl der vorgenannten Schlitze (33), die in die besagte Trägerscheibe eingearbeitet sind, gleich der Anzahl der Schlitze (36) ist, die in die Gesamtheit der besagten Progressivitätsplättchen eingearbeitet sind.

6. Reibungskupplungsscheibe nach Anspruch 5, wobei jedes Progressivitätsplättchen einen vorgenannten Schlitz (36) enthält, **dadurch gekennzeichnet,** daß sich der Schlitz (36) jedes Progressivitätsplättchens und der Schlitz (33) der Trägerscheibe gegenüber diesem Plättchen beiderseits des besagten Montagestreifens (28) in Umfangsrichtung befinden.

7. Reibungskupplungsscheibe nach Anspruch 6, **dadurch gekennzeichnet,** daß die Schlitze (36, 33) der Progressivitätsplättchen (13) und der Trägerscheibe (12) eine geringere Höhe als die Montagestreifen haben.

8. Reibungskupplungsscheibe nach einem der vorangehenden Ansprüche, **dadurch gekennzeichnet,** daß jedes Progressivitätsplättchen (13) mit der besagten Trägerscheibe auf dem besagten Montagestreifen (28) an wenigstens zwei Befestigungspunkten fest verbunden ist, so daß eine diese beiden Punkte verbindende Linie in etwa durch den Schwerpunkt des besagten Progressivitätsplättchens hindurchgeht.

9. Reibungskupplungsscheibe nach einem der vorangehenden Ansprüche, **dadurch gekennzeichnet ,** daß sich der Einschnitt (30) bis zur Außenkante der Trägerscheibe (12) erstreckt.

10. Reibungskupplungsscheibe nach Anspruch 9, **dadurch gekennzeichnet,** daß der Einschnitt (30) insgesamt eine L-Form aufweist.

## Claims

1. A clutch friction disc, of the type including a liner-carrying assembly comprising a support disc (12) and progressivity plates (13) fixed on one face of the said support disc, characterised in that each progressivity plate is fixed to a mounting strip (28) of the said support disc, which is offset axially from the main plane of the latter towards the progressivity plate concerned, the said mounting strip being partly separated by a cut-out (30) and being joined to the said main plane of the said disc by means of a fold zone (32), in that the side edges (31) of each progressivity plate are bent towards the said main plane of the said support disc, and in that the mounting strips (28) extend over a major part of the height of the progressivity plate (13).

2. A clutch friction disc according to Claim 1, characterised in that one edge (30b) of each cut-out, parallel to a said mounting strip (28), is bent towards a corresponding progressivity plate.

3. A clutch friction disc according to Claim 1 or Claim 2, characterised in that the said support disc has slots (33), the edges of which are bent towards the said progressivity plates.

4. A clutch friction disc according to one of Claims 1 to 3, characterised in that the said progressivity plates have slots (36), the edges of which are bent towards the said support disc.

5. A clutch friction disc according to Claims 3 and 4 in combination, characterised in that the number of said slots (33) formed in the said support disc is equal to the number of slots (36) formed in all of the said progressivity plates together.

6. A clutch friction disc according to Claim 5, in which each progressivity disc has a said slot (36), characterised in that the slot (36) of each progressivity plate and the slot (33) of the support disc facing the said plate are situated circumferentially on either side of the said mounting strip (28).

7. A clutch friction disc according to Claim 6, characterised in that the slots (36, 33) of the progressivity plates (13) and support disc (12) have a height which is less than that of the mounting strips.

8. A clutch friction disc according to one of the preceding Claims, characterised in that each progressivity plate (13) is fixed to the said support disc, on the said mounting strip (28), in at least two fastening points such that a line joining the said two points passes substantially through the centre of gravity of the said progressivity plate.

9. A clutch friction disc according to one of the preceding Claims, characterised in that the cut-out (30) extends to the outer edge of the support disc (12).

10. A clutch friction disc according to Claim 9, characterised in that the cut-out (30) is generally L-shaped.
